## Europäisches Patentamt
## European Patent Office
## Office européen des brevets

(11) Numéro de publication: **0 084 487**
**B1**

(12) **FASCICULE DE BREVET EUROPEEN**

(45) Date de publication du fascicule du brevet: **20.11.86**

(51) Int. Cl.⁴: **B 62 D 5/08**

(21) Numéro de dépôt: **83400068.9**

(22) Date de dépôt: **12.01.83**

(54) **Distributeur hydraulique à réaction sur organe de commande.**

(30) Priorité: **14.01.82 ES 509159**

(43) Date de publication de la demande:
**27.07.83 Bulletin 83/30**

(45) Mention de la délivrance du brevet:
**20.11.86 Bulletin 86/47**

(84) Etats contractants désignés:
**DE FR GB IT SE**

(56) Documents cités:
**EP-A-0 011 036**
**EP-A-0 066 507**
**EP-A-0 072 731**
**FR-A-2 308 001**
**FR-A-2 435 380**
**FR-A-2 442 753**

(73) Titulaire: **BENDIX ESPANA S.A.**
**Balmes 243**
**Barcelona 6 (ES)**

(72) Inventeur: **Simon Bacardit, Juan**
**Calle Mallorca 451**
**Barcelona 13 (ES)**

(74) Mandataire: **Le Moenner, Gabriel et al**
**SERVICE BREVETS BENDIX 44, Rue François 1er**
**F-75008 Paris (FR)**

Courier Press, Leamington Spa, England.

## Description

La présente invention concerne les distributeurs hydrauliques pour servo-mécanismes, plus particulièrement pour servo-direction de véhicule automobile, comprenant un organe primaire et un organe secondaire définissant mutuellement des moyens de valve de distribution modulables mis en oeuvre sélectivement lors d'un déplacement relatif limité des organes primaire et secondaire de part et d'autre d'une position centrale, l'organe primaire étant connecté à un organe d'actionnement d'entrée, typiquement le volant de direction du véhicule, et à un dispositif de réaction actionné hydrauliquement par des pressions de réaction modulées extérieurement, l'organe secondaire étant connecté à un mécanisme entraîné, typiquement le mécanisme de direction des roues du véhicule, et à un dispositif hydraulique ou vérin d'assistance commandé par les moyens de valve de distribution.

Un tel distributeur hydraulique à réaction modulable sur l'organe de commande d'entrée est décrit dans le document EP—A—0 072 731 publié le 23 Mars 1983 (Etat de la technique selon l'Article 54 (3) de la CBE).

La présente demande a pour objet de proposer un agencement de distributeur hydraulique de ce type, de conception simplifiée et de faibles coûts de fabrication et permettant de moduler aisément et dans une grande plage de varations les caractéristiques couple/pression du distributeur en fonction des paramètres externes déduits notamment de conditions de marche du véhicule, et plus particulièrement de moduler à la demande ou automatiquement le point central et la pente ou taux de réaction de la caractéristique d'une servo-direction.

Pour ce faire, selon l'invention, le dispositif de réaction comporte des entrées opposées alimentées chacune par un circuit indépendant provenant d'une sortie correspondante d'un moyen de valve à fonction logique. Ou actionné par l'organe primaire et mise en oeuvre par ce dernier avant que les moyens de valve de distribution ne soient mis en oeuvre pour commander le dispositif hydraulique d'assistance.

Selon un aspect particulier de l'invention, chaque circuit indépendant est dérivé d'un circuit de modulation correspondant incluant au moins un étranglement variable contrôlé extérieurement d'un côté (amont ou aval) du moyen de valve OU, les pressions de modulation pouvant être obtenues à partir de l'entrée de pression des moyens de valve de distribution ou à partir de conduits de distribution respectifs.

La présente invention s'applique en particulier aux distributeurs comprenant deux circuits parallèles entre une source de pression et une bâche, à partir de chacun desquels par un conduit de distribution conduisant respectivement à une des chambres de travail du dispositif d'assistance, des étranglements actionnés par l'organe primaire étant prévus dans chaque circuit de chaque côté du point d'où part ledit conduit respectif, lesdits étranglements étant actionnés de manière que se ferment, dans une première phase, un étranglements du côté de la bâche pour déterminer le point d'équilibre hydraulique du système de direction, puis, dans une seconde phase, l'un des étranglements du côté de la source de pression pour créer la pression différentielle de commande du dispositif d'assistance, et avantageusement aux distributeurs hydrauliques du type en étoile, comprenant un rotor et stator ajustés hermétiquement et couplés respectivement aux organes primaires et secondaires, des ouvertures de pression et des ouvertures de décharges adjacentes étant formées dans l'un des éléments, des ouvertures de travail étant formées dans l'autre élément, entre les ouvertures du premier élément, de façon à former entre elles des étanglements variables, les chambre de réaction étant indépendantes des ouvertures de travail, le moyen de valve à fonction logique OU étant alors constitué de paires de bords d'étranglements situés de part et d'autre des ouvertures d'entrée du distributeur en forme d'étoile.

Les dessins joints montrent, à titre d'exemple non limitatif de la portée de la présente invention, des représentations schématiques de certains mode de réalisation préférés de l'invention.

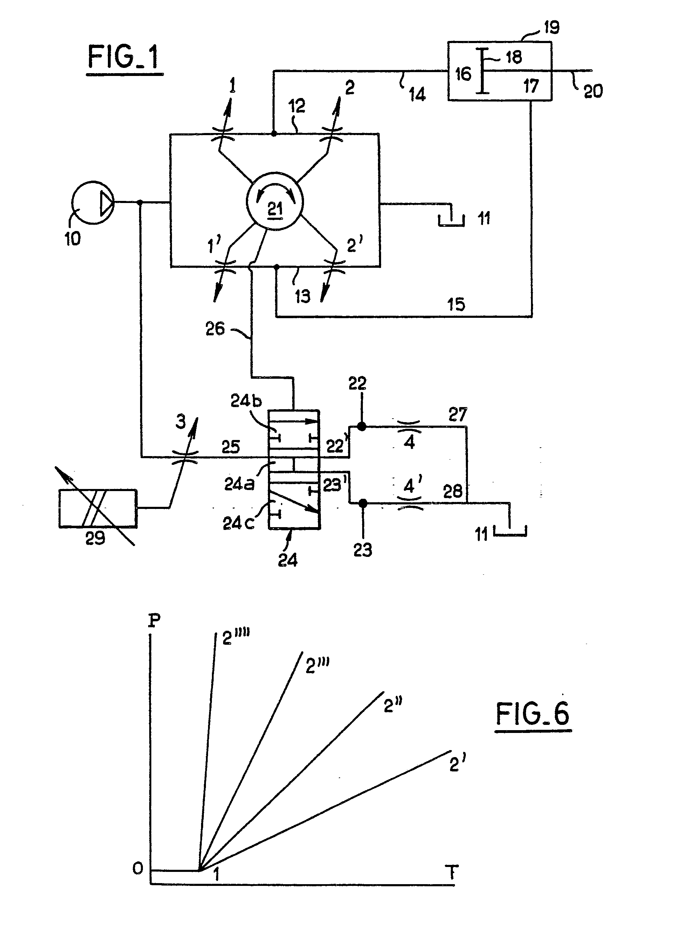

Sur ces dessins: la figure 1 est un diagramme de principe d'un distributeur de servo-système hydraulique contrôlant un dispositif d'actionnement à double effet et pourvu des perfectionnements selon la présente invention;

Les figures 2, 3, 4, et 5 représentent des variantes de réalisation du distributeur de la figure 1;

Les figures 6, 7, et 8 sont des graphes représentant les caractéristiques correspondant aux pressions de sortie elles mêmes correspondant à différents couples d'actionnement du distributeur selon les cinq modes de réalisation précédents.

Les figures 9, 10, et 11 sont des schémas partiels d'un distributeur en forme de disque ou d'etoile représenté en position de repos et dans deux positions d'actionnement disctintes, respectivement; et

Les figures 12, 13 et 14 montrent un tel distibuteur en forme de disque ou d'étoile, en vue frontale, partiellement en arraché, dans trois positions correspondant à celles représentées sur les figures 9, 10, et 11, respectivement.

Dans le mode de réalisation de la figure 1, une pompe hydraulique 10 envoie du fluide sous pression vers un bâche ou décharge 11 à travers deux circuits parallèles 12 et 13 d'un distributeur comprenant chacun au moins une paire de dispositifs de restriction ou étranglements variables 1, 2 et 1', 2'. D'entre les étranglement de chaque paire partent, respectivement, des conduits 14 et 15 conduisant aux chambres de travail opposées respectives 16 et 17, séparées par le piston 18, du dispositif ou cylindre d'assistance 19 du servo-

2

mécanisme contrôlé par le distributeur et dont la sortie de force est représentée par la tige de piston 20. Les quatres étranglements 1, 2, 1', 2' sont actionnés par un dispositif de commande 21 déplaçable sélectivement de part et d'autre d'une position centrale de repos de telle façon que, par exemple, lorsque le dispositif 21 est actionné pour tourner vers la gauche, sur les dessins, les étranglement 1 et 2' se ferment en même temps que s'ouvrent les étranglements 1' et 2, avec la conséquence que le fluide hydraulique en provenance de la pompe 10 est adressé, via la conduit 15, à la chambre 17 du dispositif d'assistance 19, le fluide contenu dans l'autre chambre 16 de ce dispositif d'assistance étant retourné à la bâche 11, via le conduit 14 et l'étranglement 2, la tige 20 se déplaçant alors vers la gauche de la figure. L'actionnement du dispositif de commande 21 dans le sens contraire produit des effets inverses de ceux décrits ci-dessus.

Un tel système de servomoteur peut être utilisé dans diverses applications bien connues de l'homme de l'art, par exemple dans les mécanismes de direction servo-assistée pour véhicules automobiles. Dans ce dernier cas, un des organes mutuellement mobiles du dispositif de commande 21 est connecté, via des moyens de transmissions adéquats, au volant de direction, l'autre organe de ce dispositif étant connecté au mécanisme de direction ou à la tige 20, les deux organes étant mutuellement accouplés par l'intermédiaire d'un accouplement à course morte présentant une position centrale stable de repos et dont l'amplitude de débattement de part et d'autre de cette position centrale est déterminée pour permettre le mouvement relatif des deux organes aux fins de distribution sélective du fluide vers le dispositif d'assistance. La présente invention est également applicable à tout type de distributeur de la classe indiquée, soit du type à base de valves à pistons ou à tiroir, soit du type à rotor et stator avec des rainures longitudinales alternées entre lesquelles se forment les étranglement de valve, soit encore aux valves dites en étoile ou à chambre discoïdale décrites dans des demandes de brevet antérieures de la demanderesse; dans tous les cas, il est possible de réaliser un dispositif de valve assurant les fonctions décrites précedemment en relation avec la figure 1.

Dans certains cas, il est prévu des moyens de réaction appliquant sur l'organe de commande associé au volant de direction une force opposée à l'effort manuel d'actionnement et de grandeur proportionnelle à la pression de travail fournie par le distributeur et à l'effort d'assistance que le dispositif de servo-assistance applique au mécanisme de direction du véhicule.

Dans les distributeurs où la réaction est appliquée par l'intermédiaire de moyens de pistons, la réalisation mécanique pratique s'en trouve compliquée de façon correspondante. Dans les distributeurs du type en étoile, la réaction est appliquée suivant un processus différentiel contre les bords opposés de bras du rotor en étoile, selon le sens d'actionnement du distributeur, de façon à ne pas exploiter en totalité la pression de réaction générée; par ailleurs, ces derniers dispositifs ne permettent pas en général une pression externe de l'amplitude de la réaction appliquée en fonction, par exemple, de diverses conditions de marche du véhicule.

Pour ce faire, selon l'invention, dans le système de la figure 1, on utilise deux dispositifs de réaction indépendants pour chaque sens d'actionnement du distributeur (non représentés), et dans le cas d'une valve du type discoïdal ou en étoile, ces dispositifs de réaction peuvent être du type qui sera décrit plus avant. Les deux chambres de réaction du dispositif de réaction sont alimentées chacune par des conduits indépendants 22 et 23 émanant de sorties correspondantes d'un mécanisme de valve commutateur qui peut être d'un type quelconque utilisé en fluidique et qui est représenté, sur la figure, sous la forme d'une valve à trois positions 24 dont l'entrée 25 est reliée à la pompe génératrice de pression 10. Dans la position centrale 24A, l'entrée est reliée en commun aux deux sorties 22' et 23' de façon que la pression de réaction soit appliquée en opposition et avec une magnitude égale dans dans les deux chambres de réaction, avec la conséquence qu'il n'apparaît aucun effort de réaction sur l'organe mobile du distributeur; dans la position extrême 24B, l'entrée 25 est reliée uniquement au conduit 22, tandis que, dans l'autre position extréme 24C, le fluide hydraulique sous pression passe uniquement vers le conduit 23. Le tiroir de la valve 24 est actionné par l'organe mobile ou primaire du distributeur 21 au moyen d'une transmission symbolisée par la ligne 25 pour être amené vers l'une ou l'autre des positions extrêmes selon le sens où le distributeur est écarté, respectivement, de sa position centrale, afin de fournir un effort de réaction contrôle uniquement dans le sens correspondant à l'actionnement du distributeur, c'est-à-dire en sens contraire de l'actionnement du volant de direction.

Par ailleurs, à partir des sorties 22' et 23' de la valve distributrice 24, partent vers la bâche 11 des conduits respectifs 27 et 28 dans lesquels sont installés des étranglements fixes 4 et 4' qui introduisent une perte de charge de façon que les pressions de réaction obtenues soient toujours dans une relation proportionnelle constante par rapport à la pression d'alimentation arrivant à l'entrée 25 de la valve 24. De plus, dans le conduit d'entrée 25 est également intercalé un étranglement variable 3 contrôlé par un dispositif d'actionnement conventionnel 29, par exemple électromagnétique, qui peut être actionné mutuellement ou automatiquement en fonction de divers paramètres de marche ou de fonctionnement du véhicule, ces paramètres de marche ou de fonctionnement du véhicule pouvant être déterminés, par exemple, par un microprocesseur formant partie de l'électronique de bord dont sont équipés la plupart des véhicules modernes. Le système peut être régulé pour fournir, par exemple, une direction relativement dure (forte réaction) lors de la marche normale, on une direction souple (réaction faible ou nulle) lors des manoeuvres à basse vitesse ou de stationnement.

On comprendra que, dans le modes de réalisation de distributeur en forme de disques ou d'étoile, les fonctions réalisées par la valve 24 peuvent être obtenues en prévoyant sur le rotor et/ou sur le stator de la valve des bords adéquats formant des étranglements ou moyens de valve de distribution équivalents.

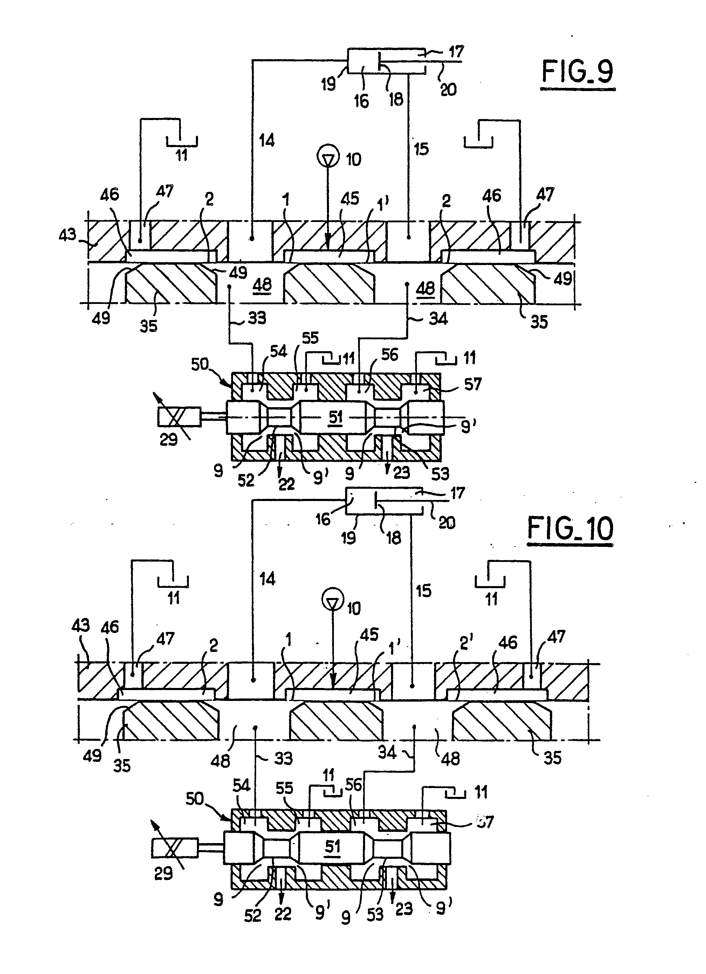

Les bords d'étranglements ou de fermeture du système distributeur sont agencés de façon que ceux entrant en pratique les premiers en jeu lors de l'actionnement du distributeur soient ceux correspondant au moyen de valve 24. Ensuite, entrent en jeu les bords 1 et 2' nécessaires pour actionner le système, les étranglements 3 et 4 ou 4' produisant dans chaque cas la pression de réaction, proportionnelle respectivement à la pression d'entrée et modulée par la position de l'étranglement variable 3. Sur le graphe de la figure 6, on a représenté la pression effective fournie par le distributeur en fonction du couple d'entrée appliqué à ce dernier. Après un tronçon horizontal 0—1, correspondant au point de fonctionnement central du système et dont le point 1 est déterminé par construction, en fonction de la disposition des bords ou arêtes du distributeur assurant les fonctions du moyen de la valve 24, apparaît une courbe de réaction 1—2 à pente variable entre les limites 1—2' (réaction maximale, déterminée par les étranglement fixes 4 et 4') et 1—2'''' (réaction minimale, déterminée par la fermeture de l'étranglement variable 3). Ein faisant varier la position de commande de l'étranglement 3 entre les deux états extrêmes de fermeture et d'ouverture (1—2'''' et 1—2', respectivement) on peut obtenir n'importe quelle courbe intermédiaire, comme celles représentées en 1—2'' et 1—2'''.

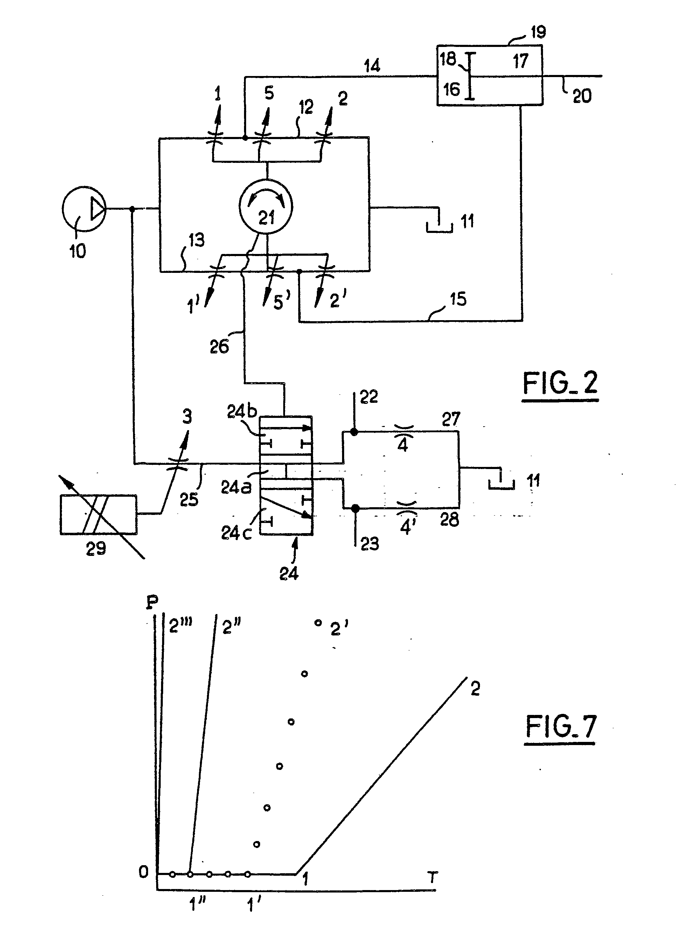

Le mode de réalisation de la figure 2 diffère de celui décrit précédemment en ce sens que sont en outre prévus, dans le rotor et le stator, des bords coopérant pour former des étranglements intermédiaires 5 et 5' dans chaque circuit 12 et 13 entre les restrictions des paires 1, 2 et 1', 2', respectivement, (ou des dispositifs de valves extérieurs contrôlés par le dispositif de commande 21 et fournissant le même effet).

La séquence de mise en oeuvre des bords ou chanfreins lors de la rotation dans un sens du rotor est la suivante:

Les premiers bords à entrer en jeu sont ceux correspondants au moyen de valve 24, qui placent le système dans l'état de réaction correspondant au sens de rotation appliqué. Ensuite entrent en jeu les bords formant les restrictions 5 et 2' entraînant une augmentation de la pression d'entrée P, mais non de l'assistance, du fait que cette pression d'entrée s'applique également de part et d'autre du piston d'assistance 18; le système se trouve alors dans la zone de fonctionnement 0—1''—1'—1 du graphe de la figure 7. Ensuite, entre en jeu le chanfrein 1, entraînant une augmentation de la pression différentielle d'assistance et de la pression d'entrée P, qui à son tour produit les pressions de réaction PrA ou PrB selon l'actionnement du distributeur dans les sens de rotation A ou B.

En fonction de ce qui précède, on comprendra que les tronçons 0—1 et 1—2 de la courbe de réponse caractéristique sont modulés simultanément, dans un rapport fixe déterminé par la construction du système. Par ailleurs, en fonction du réglage de l'étranglement 3, la courbe caractéristique peut varier de façon continue entre les caractéristiques 0—1—2 et 0—2''', comme figuré par exemple par les courbes intermédiaires 0—1'—2' et 0—1''—2'' sur la figure 7.

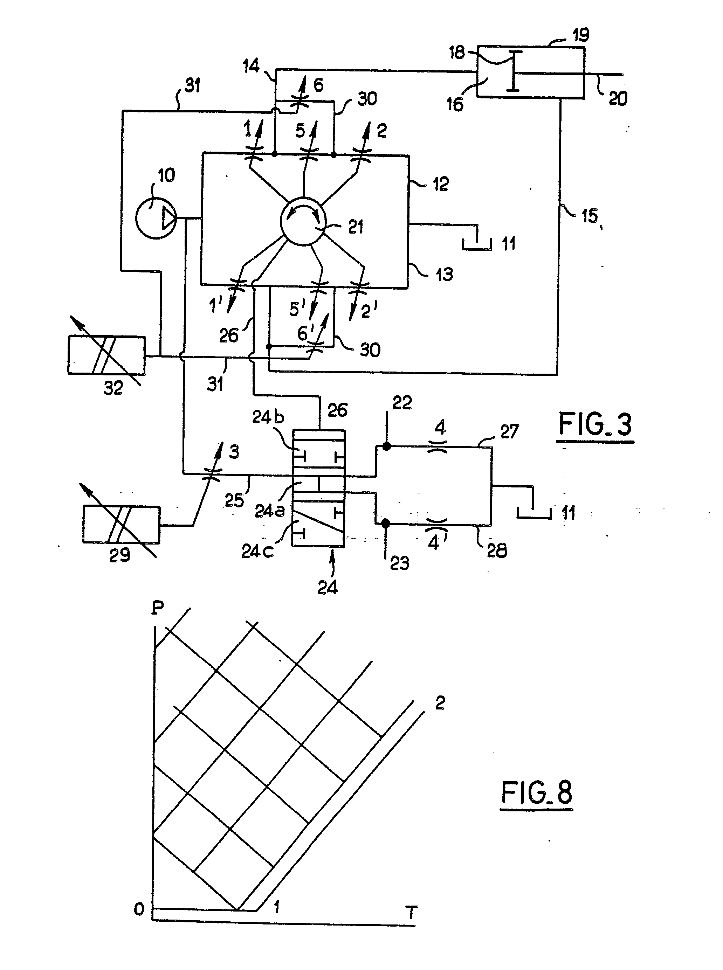

Le mode de réalisation de la figure 3 diffère de celui décrit en relation avec les figures 2 et 7 en ce sens qu'il a pour objet de rendre le fonctionnement des étranglements 5 et 5' sélectivement indépendant de l'ensemble distributeur; à cet effet, on a simplement prévu deux étranglements variables supplémentaires 6 et 6' dans des conduits 30 disposés en parallèle ou en bi-passe avec les étranglements 5 et 5', respectivement. Ces étranglements variables 6, 6' sont actionnés par des transmissions, symbolisées en 31, à partir d'un ou deux dispositifs d'actionnement externes 32, par exemple électromagnétiques, actionnés manuellement ou à partir d'informations provenant du microprocesseur de l'installation électronique de bord du véhicule.

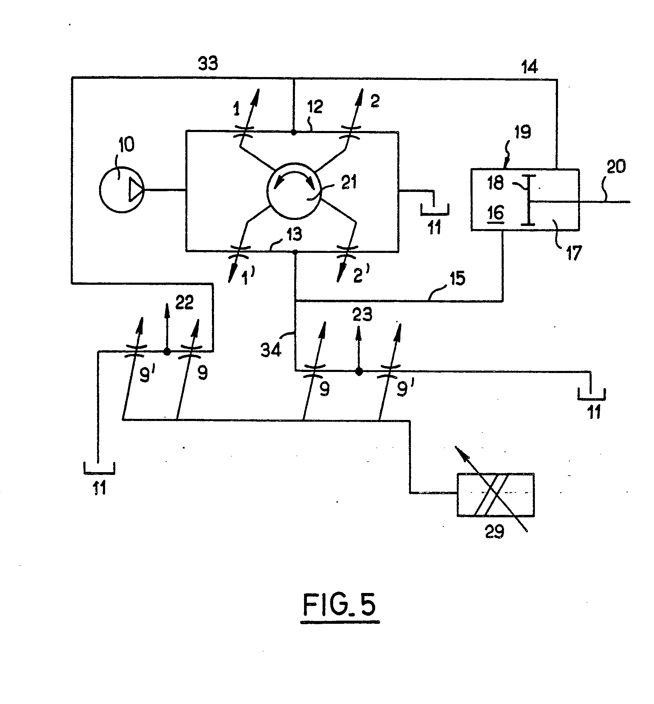

Grâce à ces étranglements, il est possible de faire varier sélectivement le débit de fluide passant par les chanfreins ou étranglement 5 ou 5', ce débit se répartissant en effet entre les étranglement 5 et 6 et 5' et 6', respectivement de façon à faire varier le tronçon 0—1, correspondant au point central de direction, de la caractéristique de la figure 5, avec la possibilité d'obtenir n'importe quelle courbe comprise dans la zone du graphe de la figure 8.

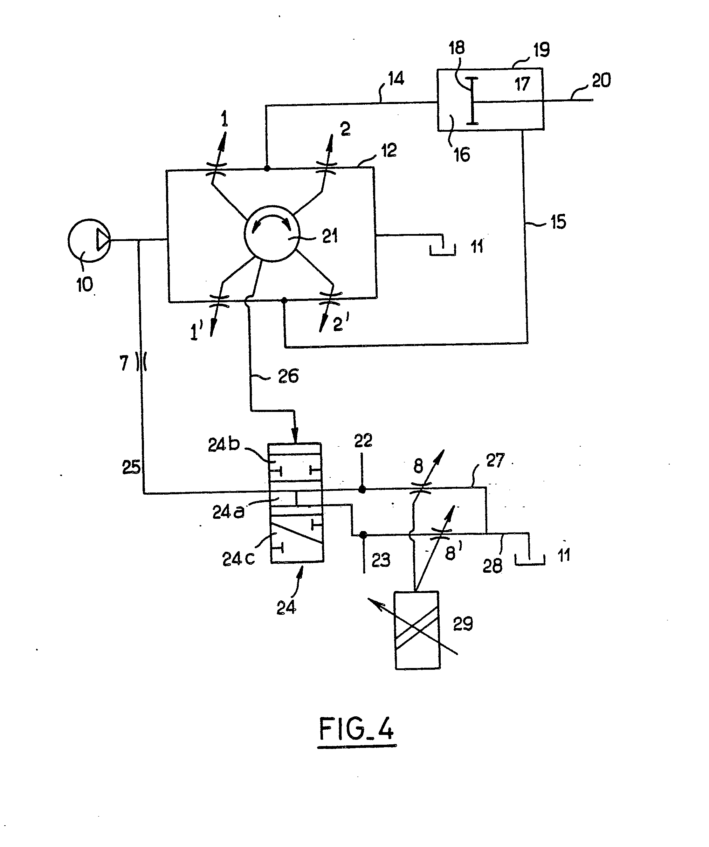

Le mode de réalisation représenté sur la figure 4 correspond en pratique à celui décrit en relation avec la figure 1 et en diffère en ce sens que les étranglements fixés 4 et 4' (aval) et l'étranglement variable 3 (amont) de part et d'autre du moyen de valve 24 sont ici substitués par deux étranglements variables 8 et 8' (aval) et un étranglement fixe 7 (amont), respectivement.

Le mode de fonctionnement obtenu est pratiquement identique à celui de la figure 1, de sorte que le graphe de la figure 6 s'applique également pour la représentation du fonctionnement du mode de réalisation représenté sur la figure 4.

Les modes de réalisation des figures 1 et 4 sont applicables aux distributeurs hydrauliques en étoile ou à chambre discoïdale faisant l'objet de demandes de brevets antérieures de la demanderesse, notamment EP.A. 0021970, en mettant en oeuvre un moyen de valve externe 24, ainsi qu'il a été décrit, ou dont le rotor et le stator sont pourvus de bords chanfreinés coopérants nécessaires pour réaliser, de façon interne, les mêmes fonctions que le moyen de valve externe 24. Il est ainsi possible d'utiliser des bords chanfreinés pour réaliser d'autres étranglements que ceux représentés sur la figure 1, par exemple sur le même rotor du distributeur ou sur un rotor additionnel de celui-ci, une solution particulièrement intéressante consistant à assurer la fonction OU du mécanisme de valve 24 au moyen des étranglements 1 et 1' qui, dans tous les modes de réalisation s'ouvrent pour adresser le fluide hydraulique sous pression vers une chambre respective du dispositif d'assistance 19, c'est-à-dire qui déterminent le sens d'actionnement du mécanisme de la direction directement en relation avec le déplacement du rotor à l'écart de sa position centrale de repos. Il suffit pour cela, comme représenté sur la figure 5, qui par ailleurs correspond exactement à la figure 1 décrite précedemment, de prélever le fluide sous pression qui doit alimenter, via les conduits 22 et 23, les chambres de réaction correspondant aux sens d'actionnement déterminés, à partir des sorties 14 et 15 alimentant respectivement les chambres de travail du dispositif d'assistance correspondant aux mêmes sens d'actionnement, directement en aval des étranglements 1 et 1'.

Dans ce cas, la modulation de la pression de réaction s'effectue comme représenté schématiquement sur la figure 5.

A partir des conduits de travail 14 et 15 partent des dérivations indépendantes 33 et 34 conduisant à la bâche 11, chacune de ces dérivation comprenant un diviseur de pression variable formé de deux étranglements 9 et 9' réglables simultanément de façon que l'un d'eux ferme tandis que l'autre ouvre, et vice versa. Les conduits de réaction 22 et 23, pour chaque sens de rotation, partent d'entre les étranglements 9 et 9' de chaque paire de façon que, lorsque l'étranglement amont 9 est totalement ouvert et que l'étranglement aval 9' est totalement fermé, la pression de réaction soit maximale, et inversement. Les deux paires d'étranglements 9 et 9' sont actionnées simultanément par un dispositif d'actionnement commun 29, par exemple électromagnétique, de façon qu'ils tendent à augmenter la pression de réaction dans le même sens d'actionnement mais que le fluide sous pression arrive seulement au diviseur correspondant au sens de rotation pré-sélectionné par la rotation du rotor du distributeur, le fonctionnement de ce dispositif étant par ailleurs totalement identique à celui représenté sur le graphe de la figure 6 correspondant au mode de réalisation de la figure 1.

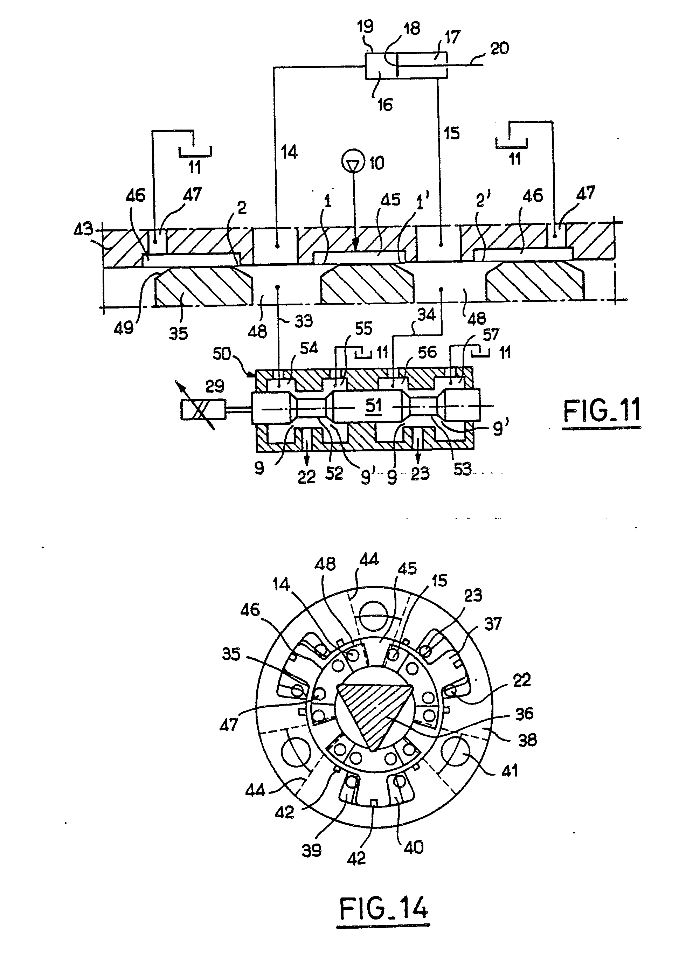

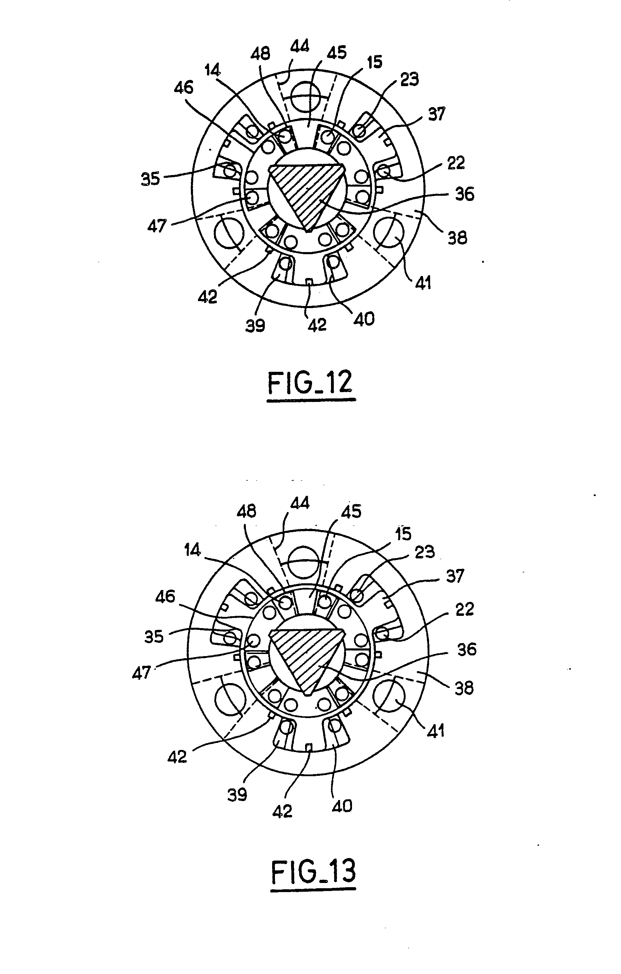

On a représenté sur les figures 9 à 14 un mode de réalisation pratique du schéma fonctionnel décrit ci-dessus, au moyen d'un valve rotative du type dit en étoile. La valve comprend typiquement un rotor en forme de disque 35 avec un orifice central profilé, par exemple triangulaire, pour son accouplement avec un organe d'actionnement 36, le rotor 35 comprenant au moins trois bras radiaux 37 angulairement répartis. Une plaque annulaire intermédiaire d'entretoisement 38, dont la surface interne s'ajuste hermétiquement avec la périphérie cylindrique principale du rotor, comporte des cavités dans lesquelles sont reçues à coulissement étanche les extrémités des bras respectifs 37 de façon à définir dans chacune d'entre elles deux chambres de réaction indépendantes 39 et 40. Deux plaques ou disque extrêmes 43, non représentés pour la clarté des dessins sur les figures 13 et 14, enserrent le rotor 35 et la plaque annulaire intermédiaire 38. Des alésages 41 traversent longitudinalement les trois plaques pour permettre le passage de boulons correspondants destinés à fixer rigidement l'ensemble du stator sur l'organe primaire du mécanisme de direction. Différents joints, tels que ceux indiqués en 42, permettent de réaliser les séparations hydrauliques nécessaires entre le diverses chambres ou cavités du dispositif distributeur.

Les plaques extrêmes du distributeur, telles que celle repérée 43 sur les figures 9 à 11, comportent des rainures radiales 44 (Figure 12—14) qui communiquent avec l'entrée de fluide sous pression du dispositif reliée à la pompe 10 et qui définissent dans le distributeur, au niveau des faces opposées du rotor 35, des chambres d'entrée 45 angulairement réparties. De part et d'autre, circonférentiellement, de chaque chambre d'entrée 45, les plaques 43 sont formées avec des dépressions qui définissent des chambres de décharge 46 à partir desquelles partent les conduits 47 conduisant à la bâche 11. Les chambres d'entrée 45 et de décharge 46 alternent angulairement en étant mutuellement séparées, le corps central du rotor 35 définissant, entre ces chambres 45 et 46, des chambres de travail 48, chacune en léger recouvrement mutuel avec une paire de ces dernières en position de repos du distributeur; les bords radiaux des chambres de travail 48 comportent des chanfreins 49 coopérant avec les bords adjacents des chambres d'entrée 45 et de sortie 46 pour former, respectivement, les étranglements 1 et 2, à la gauche (sur les figures 9 à 11) d'une chambre d'entrée 45, et 1' et 2', à la droite de cette chambre d'entrée. Des chambres de travail 48 partent, d'une part, les conduits 14 et 15 conduisant aux chambres de travail du dispositif d'assistance 19 et d'autre part, les conduits de dérivation 33 et 34 qui conduisent, pour leur part, aux moyens modulateurs de la réaction. Sur les figures 9 à 11, ces moyens modulateurs de réaction sont constitués par une valve coulissante unitaire, repérée par la référence générale 50 comprenant un tiroir relié au dispositif d'actionnement (électromagnétique) 29 et formé périphériquement avec deux rainures annulaires séparées axialement 52 et 53; le tiroir est reçu à coulissement dans un alésage correspondant du corps de valve, lui-même formé de deux paires de rainures annulaires 54, 55 et 56, 57 dont les bords internes forment, avec les bords externes de rainures 52 et 53 du tiroir 51, les étranglements variables 9 et 9' de chaque circuit de réaction.

Les figures 9 et 12 représentent le distributeur dans sa position centrale de repos. Dans cet état, le fluide sous pression provenant de la pompe 10 se répartit également des deux côtés du distributeur à travers les étranglements 1 et 2 dans un sens, et 1' et 2' dans l'autre. Les pertes de charge différentielles qui se produisent au niveau de ces étranglements sont, dans cette configuration, pratiquement nulles; par ailleurs, les possibles réactions sont équilibrées des deux côtés du système. Le distributeur de commande n'a alors aucun effet sur le système de direction.

En tournant le volant, il se produit un déplacement relatif du rotor 35 par rapport aux plaques 43 du stator, de sorte que les restrictions 1' et 2 (dans le cas d'un déplacement vers la droite du rotor sur les figures) réalisent un étranglement du trajet de fluide poduisant une perte de charge entraînant une augmentation de pression dans la chambre de travail 48 du côté gauche de la figure 10 qui correspond, en développée, à la configuration de la figure 13; l'étranglement 2' s'ouvre parallèlement proportionnellement et la chambre de travail 48 sur la droite de la figure 10 est alors en communication pratiquement directe avec la bâche 11 via le conduit 47, de sorte qu'il se crée dans les conduits 14 et 15 une pression différentielle amenant le dispositif ou vérin d'assistance 19 à déplacer sa tige 20 vers la droite sur la figure 10. En parallèle avec les étranglement 1' et 2, on trouve les étranglements du mécanisme de valve modulatrice 50 (c'est-à-dire une des paires 9 et 9' selon le sens de fonctionnement) de façon que la chambre 54 de la servo-valve modulatrice 50 reçoive la même pression de travail que celle aboutissant à la chambre de travail 16 du vérin 19, la chambre 56 de la servo-valve 50 étant alors reliée à la bâche 11, via le conduit 34, la chambre de travail 49 du distributeur à la droite de la figure et le conduit de décharge 47. Dans la valve modulatrice 50, le débit de fluide qui passe par les étranglements 9 et 9' de la gauche de la figure 10 est fonction de l'étranglement de ces derniers et de la pression de travail sur ce côté respectif (chambre de travail de gauche 48) du système. Si, comme représenté sur la figure 10, le tiroir 51 de la valve modulatrice 50 est déplacé vers la gauche de la figure, l'étranglement 9' se rétrécit de façon que la pression de réaction contenue dans la chambre formée par la rainure 52 soit transmise par le conduit 22 à la chambre de réaction 39 et agisse ainsi contre les bras de réaction 37 du rotor 35 dans le sens opposée à celui de l'actionnement du rotor 35 (figure 13). Les étranglements 9 et 9' du côté droit de la servo-valve modulatrice 50 (figure 10) produisent un effet similaire, si ce n'est que, dans ce cas, la pression qui atteint la chambre 56 est beaucoup plus réduite, de même que la pression de réaction qui arrive à la chambre de réaction opposée 39, de sorte que s'exercent sur les bras 37 du rotor en forme d'étoile 35 des pressions différentielles qui sollicitent le rotor dans le sens opposé à celui de l'actionnement du rotor, comme susmentionné.

Dans ces conditions, la réaction obtenur est représentée par la courbe 0—1—2' comme représenté sur la figure 6; les étranglements amont 9 définissent alors une section de passage inférieure à celle des étranglements aval 9', de sorte que la pression de réaction qui se produit dans la chambre 52 n'est plus qu'une partie de la pression de travail créée dans le chambre de travail 48 de la valve distributrice. Si le déplacement du tiroir 51 est maximum dans cette direction (vers la droite), on obtient la caractéristique de réaction minimale 0—1—2'''' de la figure 6, et si le tiroir 51 est déplacé continument entre les deux limites sus-mentionnées, on peut obtenir une quelconque caractéristique entre ces deux caractéristiques limites.

Les caractéristiques de chacun des modes de réalisation décrits précédemment peuvent, évidemment, être incorporées dans d'autres modes de réalisation pour obtenir une combinaison correspondante des résultats attendus. Ainsi, par exemple, les étranglement 5 et 5'—éventuellement également les étranglements 6 et 6' des figures 2 et 3, respectivement-peuvent être incorporés dans le mode de réalisation de la figure 5 pour obtenir le fonctionnement représenté sur les figures 7 et 8, respectivement.

**Revendications**

1. Distributeur hydraulique pour servomécanisme, plus particulièrement pour servo-direction de véhicule automobile, comprenant un organe primaire (35) et un organe secondaire (38, 43) définissant mutuellement des moyens de valve de distribution modulables (1, 2; 1', 2'; 5, 5') mis en oeuvre sélectivement lors d'un déplacement relatif limité des organes primaire et secondaire de part et d'autre d'une position centrale, l'organe primaire (35) étant connecté à un organe d'actionnement d'entrée et à un dispositif de réaction (37, 39, 40) actionné hydrauliquement par des pressions de réaction modulées extérieurement, l'organe secondaire (38, 43) étant connecté à un mécanisme entraîne et à un dispositif hydraulique d'assistance commandé par les moyens de valve de distribution, le dispositif de réaction comportant des entrées opposées (39, 40) alimentées chacune par un circuit indépendant (22, 23) provenant d'une sortie correspondante d'un moyen de valve à fonction logique OU (24; 1, 1') actionné par l'organe primaire (35) et mis en oeuvre par ce dernier avant que les moyens de valve de distribution (1, 2; 1', 2'; 5, 5'') ne soient mis en oeuvre pour commander le dispositif hydraulique d'assistance.

2. Distributeur selon la revendication 1, caractérisé en ce que chaque circuit indépendant (22, 23) est dérivé d'un circuit de modulation correspondant (27, 38; 33, 34) incluant au moins un étranglement variable contrôlé extérieurement (3; 8, 8'; 9, 9') d'un côté au moins du moyen de valve OU (24; 1, 1').

3. Distributeur selon la revendication 2, caractérisé en ce que chaque circuit de modulation (27, 28; 33, 34) comprend au moins un étranglement (4, 4'; 8, 8'; 9, 9') en aval de la dérivation du circuit indépendant (22, 23).

4. Distributeur selon la revendication 3, caractérisé en ce que l'étranglement variable contrôlé extérieurement (8, 8'; 9, 9') est situé en aval du moyen de valve OU (24, 1, 1'), les étranglements variables des deux circuits de modulation (27, 28, 33, 34) étant actionnés simultanément.

5. Distributeur selon la revendication 3, caractérisé en ce que l'étranglement variable contrôle extérieurement (3) est situé en amount du moyen de valve OU (24).

6. Distributeur selon l'une des revendications 1 à 3 et 5, caractérisé en ce que les pressions de modulation dans les circuits de modulation (27, 28) sont obtenues à partir de l'entrée de pression (10) du distributeur.

7. Distributeur selon l'une des revendications 1 à 4, caractérisé en ce que les pressions de modulation dans les circuits de modulation (33, 34) sont obtenues à partir des chambres de travail (17, 16) du dispositif d'assistance (19).

8. Distributeur selon la revendication 7, comprenant deux circuits parallèles (12, 13) entre une source de pression (10) et une bâche (11), à partir de chacun desquels part un conduit (14, 15) conduisant respectivement aux chambres de travail (16, 17) du dispositif d'assistance (19), des étranglements (1, 2; 1', 2'; 5, 5') actionnés par l'organe primaire (35) étant prévus dans chaque conduit (12, 13) de chaque côté du point d'où part ledit conduit respectif (16, 15), caractérisé en ce que lesdits étranglements sont actionnés de manière que se ferme, dans une première phase, un étranglement (2, 2') du côté de la bâche (11) pour déterminer le point d'équilibre hydraulique du système de direction, puis, dans une seconde phase, se ferme l'un des étranglements (1, 1') du côté de la source de pression (10) pour créer la pression différentielle de commande du dispositif d'assistance.

9. Distributeur selon la revendication 8, caractérisé en ce que le distributeur comprend, dans chaque circuit parallèle (12, 13), deux étranglements en série (5, 5'; 2, 2') du côté de la bâche (11).

10. Distributeur selon la revendication 9, caractérisé en ce que le distributeur comprend, dans chaque circuit parallèle (12; 13), un étranglement (6, 6') en parallèle avec l'étranglement aval (5, 5') adjacent à la dérivation de travail, ces étranglements (6, 6') étant réglables extérieurement pour moduler le point d'équilibre hydraulique du système de direction.

11. Distributeur selon la revendication 8, comprenant un rotor en étoile formant organe primaire (35) et un stator formant organe secondaire (38, 43,) ajustés hermétiquement, des ouvertures d'entrée de pression (45) et des ouvertures de décharge (46) adjacentes étant formées dans l'un (43) des éléments, des ouvertures de travail (48) étant formées dans l'autre (35) élément, entre les ouvertures adjacentes du premier élément de façon à former entre elles des étranglements variables (1, 1'; 2, 2'), des chambres de réaction (39, 40) étant définies par des bras (37) du rotor (35) dans des cavités du stator (38), caractérisé en ce que les chambres de réaction (39, 40) sont indépendantes des ouvertures de travail (48).

12. Distributeur selon la revendication 11, caractérisé en ce que le mécanisme de valve à fonction logique OU est constitué de paires de bords d'étranglements (1, 1') situés de part et d'autre des ouvertures d'entrée (45) du distributeur.

13. Distributeur selon la revendication 12, caractérisé en ce que les paires de bords d'étranglements (1, 1') appartiennent aux ouvertures de travail (48).

14. Distributeur selon l'une des revendication 11 à 13, caractérisé en ce que les chambres de réaction (39, 40) communiquent chacune avec un point médian d'un circuit s'étendant entre les ouvertures de travail (48) et la bâche (11), entre deux étranglements variables en série (9, 9') de ce circuit actionnés extérieurement dans des sens contraires.

## Patentansprüche

1. Hydraulischer Verteiler für einen Servomechanismus, insbesondere für eine Kraftfahrzeug-Servolenkung, mit einem primären Organ (35) und einem sekundären Organ (38, 43), die zusammen ein Verteilerventil (1, 2; 1', 2'; 5, 5') bilden, das bei einer begrenzten Relativverschiebung des primären und sekundären Organs beidseitig zu einer zentralen Stellung wahlweise in Betrieb setzbar ist, wobei das primäre Organ (35) mit einem Einlaßbetätigungselement und einer Reaktionsvorrichtung (37, 39, 40) verbunden ist, die durch von außen modulierte Reaktionsdrücke hydraulisch betätigbar ist, wobei das sekundäre Organ (38, 43) mit einem angetriebenen Mechanismus und einer hydraulischen Servovorrichtung verbunden ist, die von dem Verteilerventil gesteuert wird, wobei die Reaktionsvorrichtung entgegengesetzte Einlässe (39, 40) aufweist, die jeweils von einem unabhängigen Kreis (22, 23) gespeist werden, der von einem entsprechenden Auslaß eines Ventils der Logikfunktion ODER (24; 1, 1') ausgeht, das von dem primären Organ (25) betätigt und von dem letzteren in Betrieb gesetzt wird, der das Verteilerventil (1, 2; 1', 2'; 5, 5'') in Betrieb gesetzt wird, um die hydraulische Servovorrichtung zu steuern.

2. Verteiler nach Anspruch 1, dadurch gekennzeichnet, daß jeder unabhängige Kreis (22, 23) von einem entsprechenden Modulationskreis (27, 28; 33, 34) abgezweigt ist, der mindestens eine von außen steuerbare veränderliche Drosselstelle (3; 8, 8', 9, 9') auf mindestens einer Seite des ODER-Ventils (24; 1, 1') umfaßt.

3. Verteiler nach Anspruch 2, dadurch gekennzeichnet, daß jeder Modulationskreis (27, 28; 33, 34) mindestens eine Drosselstelle (4, 4'; 8, 8'; 9, 9') stromab der Abzweigung des unabhängigen Kreises (22, 23) aufweist.

4. Verteiler nach Anspruch 3, dadurch gekennzeichnet, daß die von außen steuerbare veränderliche Drosselstelle (8, 8'; 9, 9') stromab des ODER-Ventils (24, 1, 1') angeordnet ist, wobei die veränderlichen Drosselstellen der beiden Modulationskreise (27, 28, 33, 34) gleichzeitig betätigt werden.

5. Verteiler nach Anspruch 3, dadurch gekennzeichnet, daß die von außen gesteuerte veränderliche Drosselstelle (3) stromauf des ODER-Ventils (24) angeordnet ist.

6. Verteiler nach einem der Ansprüche 1 und 3—5, dadurch gekennzeichnet, daß die Modulationsdrücke in den Modulationskreisen (27, 28) vom Druckeinlaß (10) des Verteilers erhalten werden.

7. Verteiler nach einem der Ansprüche 1—4, dadurch gekennzeichnet, daß die Modulationsdrücke in den Modulationskreisen (33, 34) von Arbeitskammern (17, 16) der Servovorrichtung (19) erhalten werden.

8. Verteiler nach Anspruch 7 mit zwei parallelen Kreisen (12, 13) zwischen einer Druckquelle (10) und einem Reservoir (11), von denen jeweils eine Leitung (14, 15) ausgeht, die zu Arbeitskammern (16, 17) der Servovorrichtung (19) führen, wobei von dem primären Organ (35) betätigte Drosselstellen (1, 2; 1', 2'; 5, 5') in jeder Leitung (12, 13) auf jeder Seite des Punktes vorgesehen sind, von denen die entsprechende Leitung (16, 15) ausgeht, dadurch gekennzeichnet, daß die Drosselstellen derart betätigt werden, daß sich in einer ersten Phase einer Drosselstelle (2, 2') auf der Seite des Reservoirs (11) schließt, um den hydraulischen Gleichgewichtspunkt des Lenksystems zu bestimmen, und dann in einer zweiten Phase die eine der Drosselstellen (1, 1') auf der Seite der Druckquelle (10) sich schließt, um die Steuerdruckdifferenz der Servovorrichtung zu erzeugen.

9. Verteiler nach Anspruch 8, dadurch gekennzeichnet, daß der Verteiler in jedem parallelen Kreis (12, 13) zwei in Reihe geschaltete Drosselstellen (5, 5'; 2, 2') auf der Seite des Reservoirs (11) aufweist.

10. Verteiler nach Anspruch 9, dadurch gekennzeichnet, daß der Verteiler in jedem parallelen Kreis (12; 13) eine Drosselstelle (6; 6') aufweist, die zu der stromabwärtigen Drosselstelle (5, 5') angrenzend an der Arbeitsabzweigung parallelgeschaltet ist, wobei diese Drosselstellen (6, 6') von außen regelbar sind, um den hydraulischen Gleichgewichtspunkt des Lenkungssystems zu modulieren.

11. Verteiler nach Anspruch 8 mit einem das primäre Organ (35) bildenden sternförmigen Rotor und einem des sekundäre Organ (34, 43) bildenden Stator und einem des sekundäre Organ (38, 43) bildenden Stator, die hermetisch ineinandergepaßt sind, wobei Druckeinlaßöffnungen (45) und angrenzende Ablaßöffnungen (46) in einem (43) der Organe gebildet sind, Arbeitsöffnungen (48) im anderen (35) Organ gebildet sind, und zwar zwischen benachbarten Öffnungen des ersten Organs, derart, daß zwischen ihnen veränderliche Drosselstellen (1, 1'; 2, 2') gebildet werden, wobei Reaktionskammern (39, 40) von Armen (37) des Rotors (35) in Ausnehmungen des Stators (38) gebildet sind, dadurch gekennzeichnet, daß die Reaktionskammern (39, 40) unabhängig von Arbeitsöffnungen (48) sind.

12. Verteiler nach Anspruch 11, dadurch gekennzeichnet, daß der Ventilmechanismus der Logikfunktion ODER von Paaren von Drosselkanten (1, 1') gebildet wird, die auf beiden Seiten von Einlaßöffnungen (45) des Verteilers angeordnet sind.

13. Verteiler nach Anspruch 12, dadurch gekennzeichnet, daß die Paare von Drosselkanten (1, 1') zu Arbeitsöffnungen (48) gehören.

14. Verteiler nach einem der Ansprüche 11—13, dadurch gekennzeichnet, daß die Reaktionskammern (39, 40) jeweils mit einem zentralen Punkt eines Kreises in Verbindung stehen, der sich zwischen den Arbeitsöffnungen (48) und dem Reservoir (11) erstreckt, und zwar zwischen zwei in Reihe geschalteten veränderlichen Drosselstellen (9, 9') dieses Kreises, die von außen in entgegengesetztem Sinn betätigt werden.

**Claims**

1. A hydraulic distributor for a servo mechanism, in particular for an automotive vehicle servo steering mechanism, comprising a primary member (35) and a secondary member (38, 43) mutually defining modulatable distribution valve means (1, 2; 1', 2'; 5, 5') selectively operated upon a limited relative displacement of the primary and secondary members on either side from a central position, the primary member (35) being connected to an input actuating member and a reaction device (37, 39, 40) hydraulically actuated by externally modulated reaction pressures, the secondary member (38, 43) being connected to a driven mechanism and to a hydraulic servo device controlled by the distribution valve means, the reaction device comprising opposite inlets (39, 40) each communicating with an independent circuit (22, 23) extending from a corresponding outlet of a valve means of the logic function OR type (24; 1, 1') actuated by the primary member (35) and operated by the latter before the distribution valve means (1, 2; 1', 2'; 5, 5") is operated for controlling the hydraulic servo device.

2. Distributor according to claim 1, characterized in that each independent circuit (22, 33) is branched off of a corresponding modulation circuit (27, 28; 33, 34) including at least one externally controlled variable restriction (3; 8, 8'; 9, 9') on at least one side of the OR-valve means (24; 1, 1').

3. Distributor according to claim 2, characterized in that each modulation circuit (27, 28; 33, 34) comprises at least one restriction (4, 4'; 8, 8'; 9, 9') downstream of the branching junction of the independent circuit (22, 23).

4. Distributor according to claim 3, characterized in that the externally controlled variable restriction (8, 8'; 9, 9') is situated downstream of the OR-valve means (24, 1, 1'), the variable restrictions of the two modulation circuits (27, 28, 33, 34) being actuated simultaneously.

5. Distributor according to claim 3, characterized in that the externally controlled variable restriction (3) is situated upstream of the OR valve means (24).

6. Distributor according to any of claims 1 to 3 and 5, characterized in that the modulation pressures in the modulation circuits (27, 28) are obtained from the pressure inlet (10) of the distributor.

7. Distributor according to any of claims 1 to 4, characterized in that the modulation pressures in the modulation circuits (33, 34) are obtained from work chambers (17, 16) of the servo device (19).

8. Distributor according to claim 7 comprising two parallel circuits (12, 13) between a pressure source (10) and a reservoir (11), from each of which there extends are conduit (14, 15) leading, respectively, to work chambers (16, 17) of the servo device (19), restrictions (1, 2; 1', 2'; 5, 5') actuated by the primary member (35) being provided in each conduit (12, 13) on each side of the place where from said respective conduit (16, 15) extends, characterized in that the restrictions are actuated such that, during a first phase, a restriction (2, 2') on the side of the reservoir (11) closes to determine the hydraulic balance point of the servo system, and thereafter, during a second phase, the one of the restrictions (1, 1') on the side of the pressure source (10) closes to create the controlling pressure differential of the servo device.

9. Distributor according to claim 8, characterized in that the distributor comprises within each parallel circuit (12, 13) two series-connected restrictions (5, 5', 2, 2') on the side of the reservoir (11).

10. Distributor according to claim 9, characterized in that the distributor comprises within each parallel circuit (12; 13) a restriction (6, 6') in parallel with the downstream restriction (5, 5') adjacent the work port branching junction, said restrictions (6, 6') being externally controllable to modulate the hydraulic balance point of the servo system.

11. Distributor according to claim 8 comprising a star-shaped rotor forming the primary member (35) and a stator forming the secondary member (38, 43) which are hermetically sealed, pressure inlet openings (45) and adjacent discharge openings (46) being formed in the one (43) of said members, the work ports (48) being formed in the other (35) of said members, between the adjacent openings of the first member, such as to form between them variable restrictions (1, 1'; 2, 2'), reaction chambers (39, 40) being defined by arms (37) of the rotor (35) within cavities of the stator (38), characterized in that the reaction chambers (39, 40) are independent of the work ports (48).

12. Distributor according to claim 11, characterized in that the valve mechanism of the logic function OR type is comprised of pairs of restricting edges (1, 1') situated on opposite sides of inlet openings (45) of the distributor.

13. Distributor according to claim 12, characterized in that the pairs of restriction edges (1, 1') are associated with the work ports (48).

14. Distributor according to any of claims 11 to 13, characterized in that the reaction chambers (39, 40) each communicate with a central point of a circuit extending between the work ports (48) and the reservoir (11), between two series-connected variable restrictions (9, 9') of this circuit externally actuated in opposite senses.

FIG_1

FIG_6

FIG_2

FIG.7

FIG. 3

FIG. 8

FIG_4

## FIG. 5

FIG.9

FIG.10

**0 084 487**

FIG.11

FIG.14

7

FIG_12

FIG_13